# EUROPEAN PATENT SPECIFICATION

(11) **EP 2 927 179 B1**
(45) Date of publication and mention of the grant of the patent: **11.01.2017**
(21) Application number: 15154929.2
(22) Date of filing: 12.02.2015
(51) Int. Cl.: B66C 23/78

(54) **Outrigger pad carrier**
Auslegerplattenträger
Support de tampon stabilisateur

(30) Priority: 03.04.2014 GB 201406022
(43) Date of publication of application: 07.10.2015
(73) Proprietor: Advante Limited, Basildon, Essex SS14 3HG (GB)
(72) Inventor: Chapman, Francis Stanley, Rayleigh, Essex SS6 8JA (GB)
(74) Representative: Sanderson & Co.

(56) References cited:
- EP-A1- 2 711 330
- CN-U- 201 800 687
- US-A1- 2013 213 920

## Description

The present invention relates to a carrier for transporting one or more outrigger pads. This invention also extends to such a carrier in combination with one or more outrigger pads, and to a truck or trailer comprising a loader crane, one or more outriggers, a load container and such a carrier. This invention also extends to a method of preparing such a truck or trailer for transportation of a load, and to a method of stabilising such a truck or trailer.

It is known to provide trucks or trailers with loader cranes. The loader cranes of these trucks or trailers can be used to load and unload heavy loads from the load container of the truck or trailer. It is also known to provide these trucks or trailers with stabilising arms or "outriggers", which can be deployed to stabilise the truck or trailer when loading and unloading particularly heavy loads. In situations where the load is extremely heavy or the surrounding ground is particularly soft, it is also common practice to place additional large outrigger pads under the smaller outrigger feet. These outrigger pads spread the force that is transmitted through the outriggers across a larger area of the ground than the feet, and thereby reduce the pressure exerted on the ground.

Outrigger pads are sometimes transported in the load container of the truck or trailer. However, this approach can use up valuable load space in the load container. An alternative approach is to transport outrigger pads in a separate vehicle. However, this is wasteful in terms of the fuel and personnel needed to drive the separate vehicle. Furthermore, some outrigger pads are particularly large and heavy, and can be difficult to move manually.

It is further known, for example from EP 2,711,330, to provide a carrier for transporting outrigger pads, the carrier having a frame for holding the outrigger pads.

It is a principal aim of this invention to provide arrangements that overcome the drawbacks of these approaches.

Thus, according to an aspect of this invention there is provided a carrier for transporting one or more outrigger pads, the carrier comprising:
a frame for holding one or more outrigger pads;
one or more mounting structures for releasably mounting the frame substantially horizontally above a load container of a truck or trailer; and
one or more carrier lifting points for lifting the carrier vertically off or onto the load container using a loader crane of the truck or trailer.

As will be appreciated, the carrier of the present invention allows one or more outrigger pads to be transported by a truck or trailer above (e.g. on and/or across) the load container of the truck or trailer on or within the frame. This means that valuable load space in the load container is not taken up by the outrigger pads and that a separate vehicle is not needed to transport the outrigger pads. Furthermore, the outrigger pads can be lifted off or onto the truck or trailer using the loader crane, and so those outrigger pads do not need to be manually lifted off or onto the truck or trailer.

In preferred embodiments, each mounting structure of the carrier extends substantially horizontally from the frame of the carrier, for example so as to rest on the side walls or roof of the load container. For example, each mounting structure may comprise a substantially horizontally extending (e.g. rectangular or square) hollow section, which can be both strong and lightweight. Each mounting structure may be directly or indirectly attached to the outer periphery of the frame.

In preferred embodiments, the carrier comprises at least one mounting structure (e.g. two mounting structures) provided at a first side of the frame and/or comprises at least one mounting structure (e.g. two mounting structures) provided at a second side of the frame that is opposed to the first side of the frame, for example so as to suitably support the carrier on the opposing side walls or roof of the load container.

In preferred embodiments, each mounting structure includes at least one of the one or more carrier lifting points, and/or comprises at least one carrier fixing point for releasably fixing the carrier above the load container. A securing means (such as a strap) may then be fixed between each carrier fixing point and a secure part of the truck or trailer (such as the load container) to secure the carrier in position.

In preferred embodiments, each mounting structure comprises one or more (e.g. at least two) mounting structure end plates. The one or more mounting structure end plates may comprise a substantially vertical section and/or an inclined (non-vertical/non-horizontal) section. The substantially vertical section is preferably provided by a substantially flat vertical end plate and/or the inclined section is preferably provided by an angled end plate.

As discussed above, each mounting structure preferably includes at least one of the above mentioned one or more carrier lifting points. In these embodiments, each carrier lifting point may be provided by a "carrier lifting structure", for example in the form of the above mentioned one or more mounting structure end plates.

The carrier lifting structure or one or more mounting structure end plates may include at least one carrier lifting point (e.g. provided in the vertical section) and/or at least one carrier fixing point (e.g. provided in the inclined section).

The carrier lifting points and/or carrier mounting points referred to herein may each comprise an eyelet (e.g. in or through the plate in question).

In preferred embodiments, one or more reinforcements are provided between each mounting structure and the frame. The one or more reinforcements may comprises one or more (e.g. a pair of) triangular plate reinforcements or "gussets".

In preferred embodiments, each mounting structure includes a spacer on the underside of the mounting structure for spacing the frame from the top of the load container of the truck, for example from the roof or the top of the side walls of the load container. The spacer preferably extends substantially horizontally, and preferably comprises a substantially horizontally extending (e.g. rectangular or square) hollow section. Again, the use of a hollow section can provide a strong but lightweight structure. The spacer may extend substantially perpendicularly to the mounting structure, for example so as to run substantially parallel to and along the top of the side walls of the load container.

In preferred embodiments, the carrier comprises one or more securing means (such as straps), and/or one or more fixing structures for securing means, for securing the one or more outrigger pads vertically to (e.g. on or within) the frame. The one or more securing means or fixing structures may be directly or indirectly attached to the outer periphery of the frame. The carrier preferably comprises at least one securing means or fixing structure (e.g. two securing means or fixing structures) provided on a third side of the frame and/or comprises at least one securing means or fixing structure (e.g. two securing means or fixing structures) provided on a fourth side of the frame that is opposed to the third side of the frame. The point at which each securing means is attached to the carrier preferably is not above, or not substantially above, a top edge of the frame, and/or the top of each fixing structure preferably does not extend above, or substantially above, a top edge of the frame. This arrangement provides a secure way of holding the one or more pads vertically to the frame with limited vertical movement of the pads. Each fixing structure may comprise a pivotable (e.g. D-shaped) loop and/or a retaining part for retaining the loop on the carrier.

In preferred embodiments, the frame is substantially rectangular and/or comprises one or more (e.g. four) side members. Each side member may comprise a substantially right-angled section, for example with a first plate of each right-angled section extending substantially horizontally inwards and a second plate of each right-angled section extending substantially vertically upwards. This allows the frame to hold an outrigger pad in place both vertically by supporting the pad from underneath and horizontally by providing a side barrier. The width and/or length of the frame may be braced by one or more frame braces. The one or more frame braces may each be a substantially flat section.

In preferred embodiments, the components of the frame (e.g. side member(s) and/or brace(s)) are steel and/or are welded together. Similarly, in preferred embodiments, the components of the mounting structure (e.g. horizontally extending section, end plate(s), reinforcement(s) and/or spacer) are steel and/or are welded together. Similarly, the frame and mounting structure may be welded together. These arrangements provide a simple but effective way to construct a strong outrigger pad carrier.

As will be appreciated, the above mentioned carrier may be provided in combination with one or more (e.g. two, four, etc.) outrigger pads, with the frame being suitably sized to hold the one or more outrigger pads. Each outrigger pad is preferably substantially rectangular.

In preferred embodiments, each outrigger pad comprises one or more pad lifting points for facilitating lifting of that pad vertically off or out of the frame, for example using the loader crane of the truck or trailer. These arrangements are particularly advantageous where the outrigger pad is large and/or heavy.

The one or more pads may each comprise a pad lifting point provided on the upper surface of the pad and/or at or near a corner of the pad. A pad lifting point may be provided at or near each corner. This can, for example, allow the pad to be placed precisely and/or horizontally on the ground by the loader crane. Each pad lifting point may be provided by a pad lifting structure that comprises a pivotable (e.g. D-shaped) loop, with the loop being pivotable between a first orientation that is substantially parallel to the plane of the pad and a second orientation that is substantially perpendicular to the plane of the pad. This can allow, for example, plural outrigger pads of similar or the same construction to be stacked when the planes of those outrigger pads are substantially parallel to one another and when each pivotable loop is in the first orientation, whilst also allowing the pad to be lifted when each pivotable loop is in the second orientation.

Indeed it is believed that the above outrigger pad arrangements are advantageous in their own right, and not merely in the context of the other aspects and embodiments described herein.

Thus, according to another aspect of this invention there is provided an outrigger pad comprising one or more pad lifting points for facilitating lifting of that pad vertically off or out of a frame, each pad lifting point being provided by a pad lifting structure that comprises a pivotable loop, with the loop being pivotable between a first orientation that is substantially parallel to the plane of the pad and a second orientation that is substantially perpendicular to the plane of the pad.

The above aspect and its embodiments may comprise any of the preferred and/or optional features described herein as desired. For example, the outrigger pad may be rectangular and/or the one or more lifting points may be provided on the upper surface and/or at or near a corner of the pad as discussed above.

In any of the above aspects or embodiments, each pad lifting structure may comprise a loop retaining part for retaining the loop on the pad. Each pad lifting structure may comprise a first plate provided on the upper surface of the pad, with the loop retaining part preferably being attached (e.g. welded) to the plate. Each pad lifting structure may also comprise a second plate provided on the lower surface of the pad, with the first plate preferably being attached (e.g. by one or more mechanical fixings, such as nuts, washers and/or bolts through the pad) to the second plate.

The present invention also extends to trucks or trailers comprising the carrier described herein.

Thus, according to another aspect of this invention there is provided a truck or trailer comprising a loader crane, one or more outriggers, a load container, and a carrier for transporting outrigger pads as described herein.

The present invention also extends to methods which make use of the carrier described herein.

Thus, according to another aspect of this invention there is provided a method of preparing a truck or trailer for transportation of a load, the truck or trailer having a loader crane, one or more outriggers and a load container, the method comprising:
placing a carrier for transporting one or more outrigger pads as described herein on the load container of the truck or trailer.

The method may comprise loading a load into the load container, preferably before placing the carrier on the load container of the truck or trailer. The method may also comprise placing one or more outrigger pads on or in the carrier, preferably before placing the carrier on the load container of the truck or trailer.

According to another aspect of this invention there is provided a method of stabilising a truck or trailer, the truck or trailer having a loader crane, one or more outriggers, a load container and a carrier for transporting one or more outrigger pads as described herein, the method comprising:
lifting the carrier off the load container of the truck or trailer;
lifting one or more outrigger pads off or out of the carrier;
placing one or more outrigger pads in a position in which the one or more outriggers will be able to rest on the one or more outrigger pads; and
deploying the one or more outriggers so as to rest on the one or more outrigger pads.

As will be appreciated, the method preferably comprises using the loader crane to carry out one or more steps selected from the group consisting of: lifting the carrier off the load container of the truck or trailer; lifting one or more outrigger pads off or out of the carrier; and placing one or more outrigger pads in a position in which the one or more outriggers will be able to rest on the one or more outrigger pads.

In preferred embodiments, the method comprises only partially deploying the one or more outriggers so as to temporarily stabilise the truck or trailer before carrying out one or more steps selected from the group consisting of: lifting the carrier off the load container of the truck or trailer; lifting one or more outrigger pads off or out of the carrier; and placing one or more outrigger pads in a position in which the one or more outriggers will be able to rest on the one or more outrigger pads. The one or more outriggers can then be fully deployed onto the outrigger pads so as to fully stabilise the truck or trailer.

In preferred embodiments, the step of lifting one or more outrigger pads off or out of the carrier is carried out after the step of lifting the carrier off the load container of the truck or trailer. This can, for example, allow the pads to be lifted and placed by hand and/or allow any securing means (such as straps) holding the pads in place to be released by hand at ground level.

As will be appreciated, the method preferably comprises unloading a load from and/or loading a load into the load container after the step of (fully) deploying the one or more outriggers so as to rest on the one or more outrigger pads. The method may then comprise at least partially retracting the one or more outriggers so as to no longer rest on the one or more outrigger pads. The method may then comprise placing one or more outrigger pads on or in the carrier, and preferably securing the one or more outrigger pads in place with one or more securing means (such as straps). The method may comprise placing the carrier on the load container of the truck or trailer, preferably after the step of placing one or more outrigger pads on or in the carrier.

Again, the loader crane may be used to carry out one or more steps selected from the group consisting of: placing the carrier on the load container of the truck or trailer; and placing one or more outrigger pads on or in the carrier. Also, in a similar but reverse manner to deploying the one or more outriggers, the method may comprise partially retracting the one or more outriggers before carrying out one or more steps selected from the group consisting of: placing the carrier on the load container of the truck or trailer; and placing one or more outrigger pads on or in the carrier. The method may then comprise fully retracting the one or more outriggers.

As will be appreciated, the term "truck" used herein includes, and/or is interchangeable with, the term "lorry". As will also be appreciated, the carrier described herein could also be used to transport other items such as vehicle track way sections.

By way of example only, embodiments of the invention will now be described in detail with reference being made to the accompanying drawings in which:
Figure 1 is a perspective view of a carrier for transporting outrigger pads according to an embodiment of this invention, together with a perspective view of an exemplary outrigger pad;
Figure 2A is a plan view of the outrigger pad carrier of Figure 1;
Figure 2B is a side view of the outrigger pad carrier of Figure 1;
Figure 2C is an end view of the outrigger pad carrier of Figure 1;
Figure 3 is a close-up side view of the strap fixing point of the outrigger pad carrier of Figure 1;
Figure 4 is a perspective view of the mounting structure of the outrigger pad carrier of Figure 1 in isolation;
Figure 5A is an end view of the mounting structure of Figure 4;
Figure 5B is a side view of the mounting structure of Figure 4;
Figure 5C is a plan view of the mounting structure of Figure 4;
Figure 6A is a plan view of an alternative outrigger pad for use with the outrigger pad carrier of Figure 1;
Figure 6B is an end view of the outrigger pad of Figure 6A;
Figure 7A is a plan view of the pad lifting structure of the outrigger pad of Figure 6A in isolation;
Figure 7B is a close-up side view of the pad lifting structure of the outrigger pad of Figure 6A;
Figure 7C is an exploded side view of the pad lifting structure of the outrigger pad of Figure 6A;
Figure 8A is a plan view of a stacking arrangement for outrigger pads;
Figure 8B is an end view of the stacking arrangement of Figure 8A;
Figure 8C is an end view of the stacking arrangement of Figure 8A when placed in the outrigger pad carrier of Figure 1;
Figure 9A is a side view of the outrigger pad carrier of Figure 1 when being mounted on a load container; and
Figure 9B is an end view of the outrigger pad carrier of Figure 1 when mounted on a load container.

It should be noted that some features shown in the above figures would not normally be visible in the particular view used, but those features are nevertheless shown as "ghosts" so as to provide a better understanding of the embodiments.

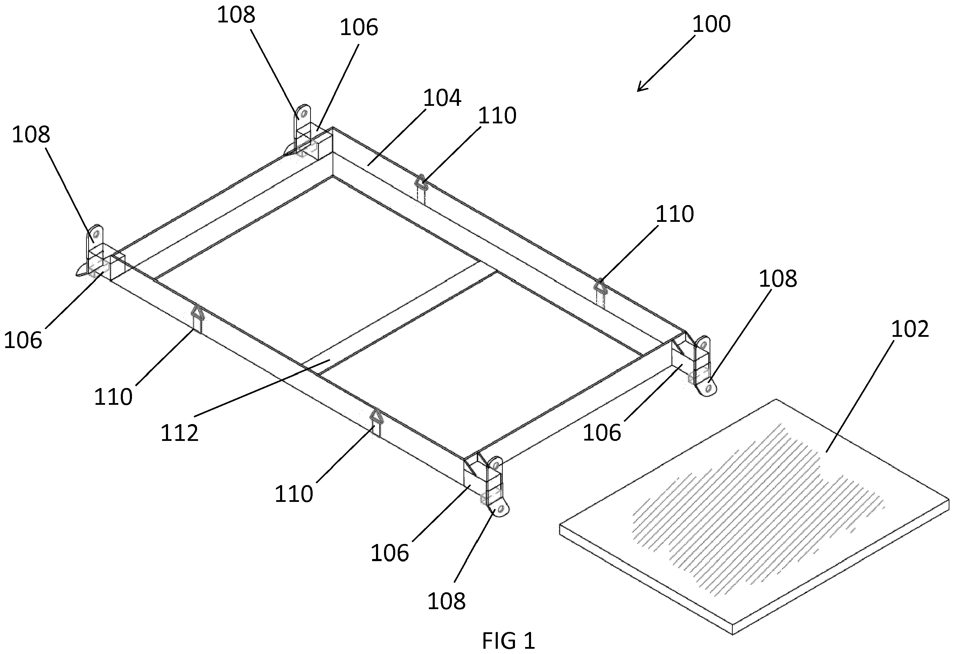

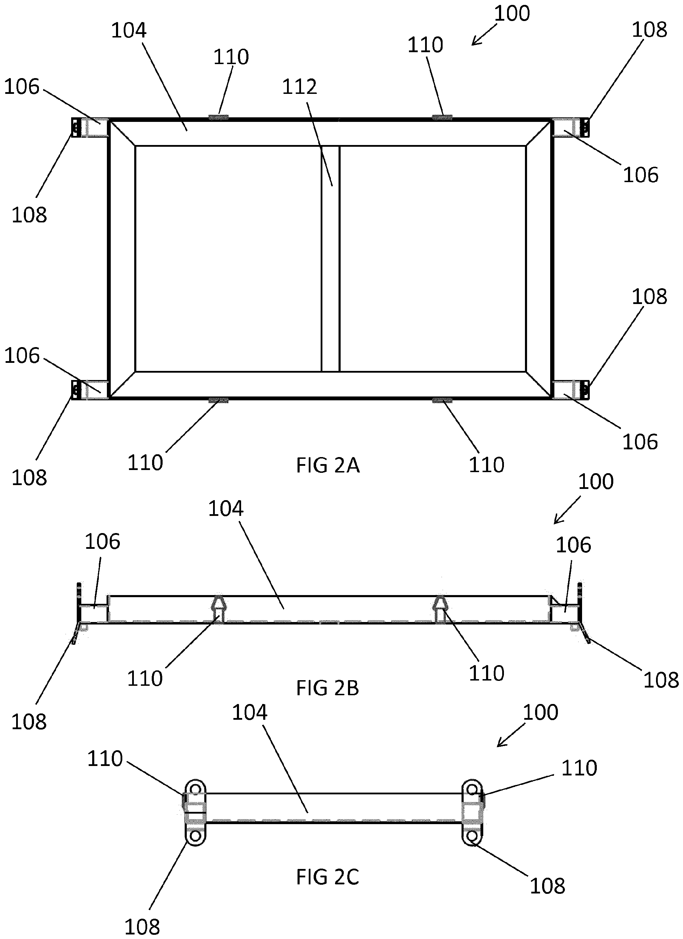

Reference will first be made to Figures 1, 2A, 2B and 2C, which show a carrier 100 for transporting four rectangular outrigger pads such as the outrigger pad 102 of Figure 1. As is shown in these figures, the carrier 100 comprises a frame 104 for holding the outrigger pads. The frame 104 is rectangular and comprises four side members. Each side member comprises a right-angled section, with a first plate of each right-angled section extending horizontally inwards and a second plate of each right-angled section extending vertically upwards. The pads are supported vertically on the first plates and are constrained horizontally by the second plates. The width of the frame 104 is braced by a frame brace 112 in the form of a flat section. The components of the frame 104 are steel and are welded together.

The carrier 100 also comprises four mounting structures 106 for releasably mounting the frame 104 horizontally above a load container of a truck or trailer. As can be seen in Figures 1 and 2A, two mounting structures 106 are provided on a first side of the frame 104 and two mounting structures 106 are provided on a second side of the frame 104. As can also be seen in Figures 1, 2A and 2B, each mounting structure 106 extends substantially horizontally from the frame 104. Each mounting structure 106 is directly attached to the outer periphery of the frame 104 by welding. The mounting structures 106 each comprise a "lifting structure" 108 having a lifting point, which can be used to lift the carrier 100 vertically off or onto the truck or trailer using a loader crane of the truck or trailer. The mounting structures 106 are described in more detail below.

The carrier 100 also comprises four fixing structures 110 that receive securing means in the form of straps (not shown) for securing the outrigger pads vertically within the frame 104. The fixing structures 110 are directly attached to the outer periphery of the frame 104. As can be seen from Figures 1 and 2A, two fixing structures 110 are provided on a third side of the frame 104, and two fixing structures 110 are provided on a fourth side of the frame 104.

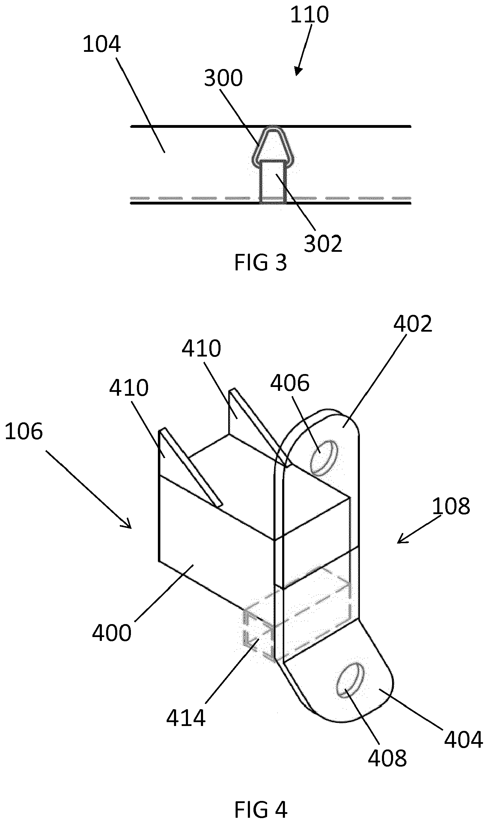

As can be seen in Figure 3, the fixing structures 110 each comprise a pivotable D-shaped loop 300 and a retaining part 302 for retaining the loop on the frame 104. As can also be seen in Figure 3, the top of the fixing structure 110 does not extend above the top edge of the frame 104. This feature of the fixing structures 110 minimises the amount of vertical movement of the outrigger pads when the pads are secured within the frame 104 using straps attached to the fixing structures 110.

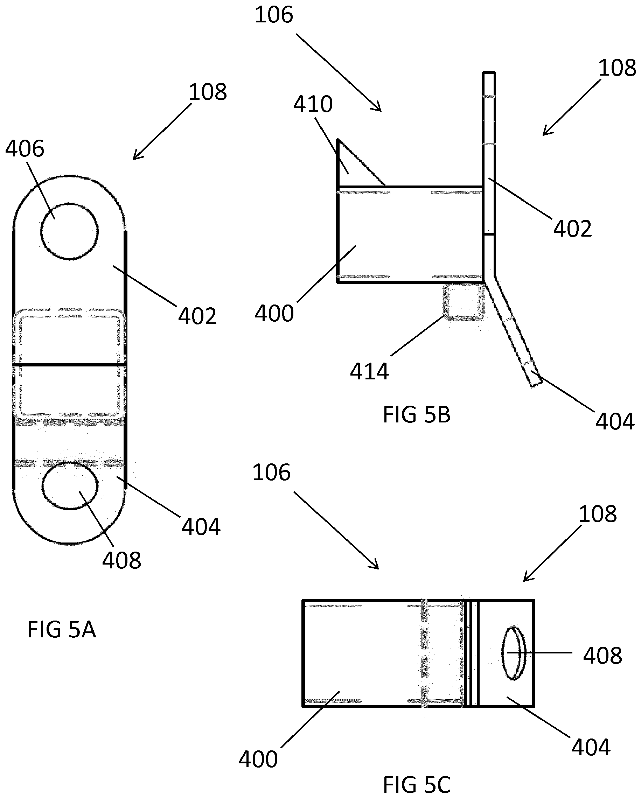

Reference will now be made to Figures 4, 5A, 5B and 5C, which show one of the mounting structures 106 in more detail. As can be seen in Figures 4, 5B and 5C, each mounting structure 106 comprises a horizontally extending square hollow section 400. A pair of triangular reinforcement plates 410 is provided between the upper surface of the hollow section 400 and the frame 104. As can be seen in Figures 4 and 5B, each mounting structure 106 also includes a spacer 414 on the underside of the hollow section 400 for spacing the frame 104 from the top of the load container of a truck or trailer. In this embodiment, the spacer 414 is a square hollow section that extends horizontally and perpendicularly to the hollow section 400 of the mounting structure 106.

The mounting structure 106 also includes the above mentioned carrier lifting structure 108, which takes the form of a first mounting structure end plate 402, which is flat and provides a vertical section, and a second mounting structure end plate 404, which is angled so as to provide an inclined section. A lifting point 406 in the form of a first eyelet is provided through the first plate 402 and a fixing point 408 in the form of a second eyelet is provided through the second plate 404. The fixing point 408 can be used, together with securing means in the form of a strap, to secure the carrier 100 to the load container of the truck or trailer.

As with the frame 104, the components of the mounting structure 106 are steel and are welded together. The frame 104 and the mounting structure 106 are also welded together.

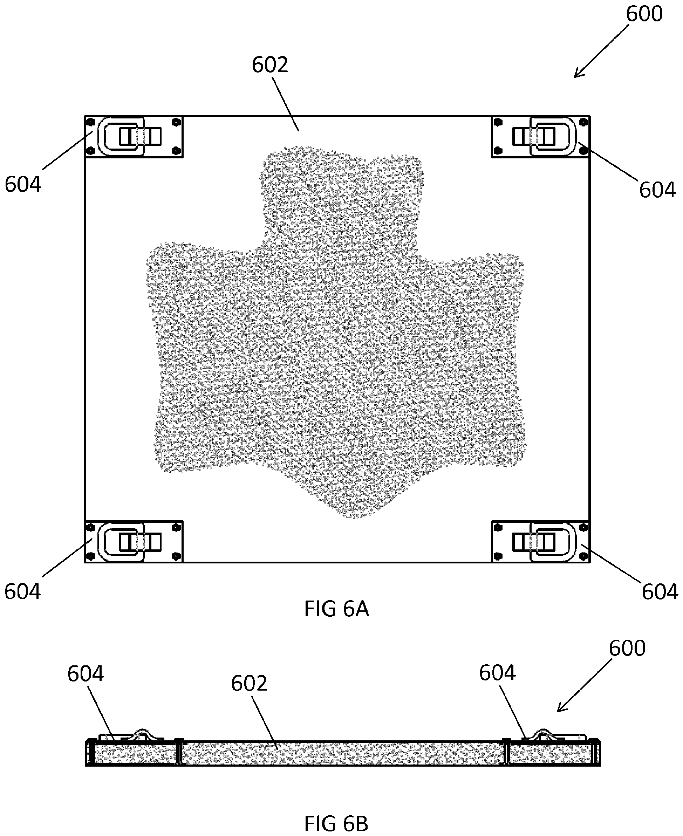

Figures 6A and 6B show an alternative outrigger pad 600 to the outrigger pad 102 shown in Figure 1. This alternative outrigger pad 600 comprises four pad lifting structures 604 on the upper surface of the pad 602. The pad lifting structures 604 provide lifting points that facilitate lifting of the pad 600 vertically out of the frame 104. As can be seen in Figure 6A, the pad lifting structures 604 are provided at the corners of the pad 600. These lifting structures 604 allow the plane of the pad 600 to remain substantially parallel to the ground when the pad 600 is being lifted. This facilitates placement of the pads 600 on the ground.

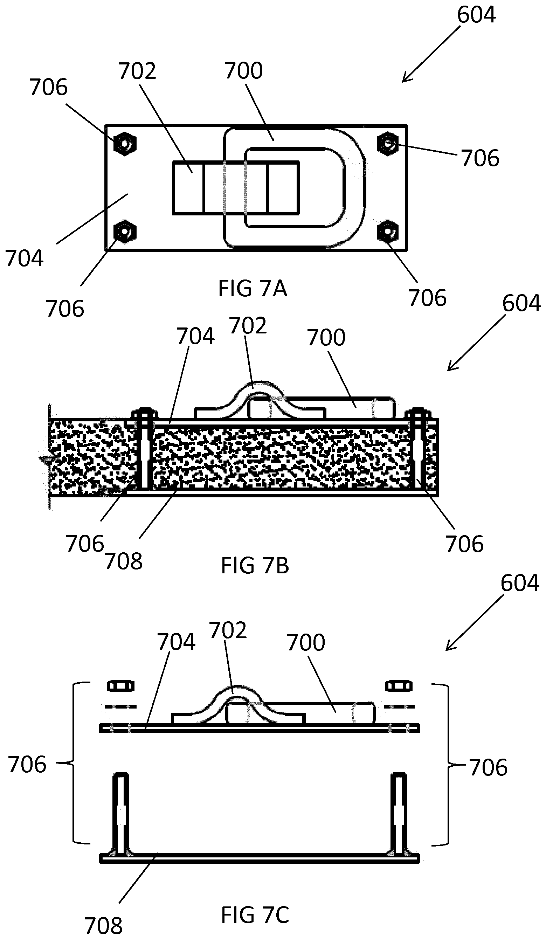

Figures 7A, 7B and 7C show one of the pad lifting structures 604 in more detail. As is shown in these figures, each pad lifting structure 604 comprises a pivotable D-shaped loop 700 and a loop retaining part 702 for retaining the loop 700 on the pad 600. Each pad lifting structure 604 also comprises a first plate 704 provided on the upper surface of the pad 600, with the loop retaining part 702 being attached to the first plate 704 by welding. Each pad lifting structure 604 also comprises a second plate 708 provided on the lower surface of the pad 600. The first plate 704 is attached to the second plate 708 by mechanical fixings 706 in the form of nuts, washers and bolts through the pad 600. The loop 700 is pivotable between a first orientation (as shown) that is parallel to the plane of the pad 600 and a second orientation (not shown) that is perpendicular to the plane of the pad 600.

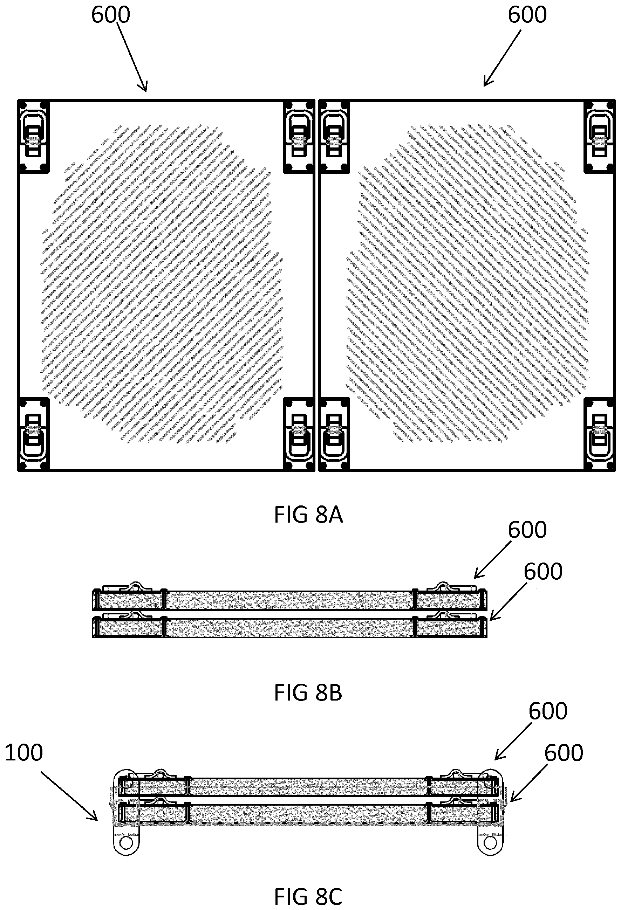

As is shown in Figures 8A, 8B and 8C, the above arrangement allows plural of the outrigger pads 600 to be stacked. Figure 8A is a plan view which shows two outrigger pads 600 side by side and Figure 8B is a side view which shows two stacked outrigger pads 600. Figure 8C shows the outrigger pads 600 when placed in the carrier 100 of Figure 1. By placing the outrigger pads 600 side by side as shown in Figure 8A and by stacking outrigger pads 600 as shown in Figures 8B and 8C, at least four outrigger pads 600 can safely be transported in the carrier 100 of Figure 1.

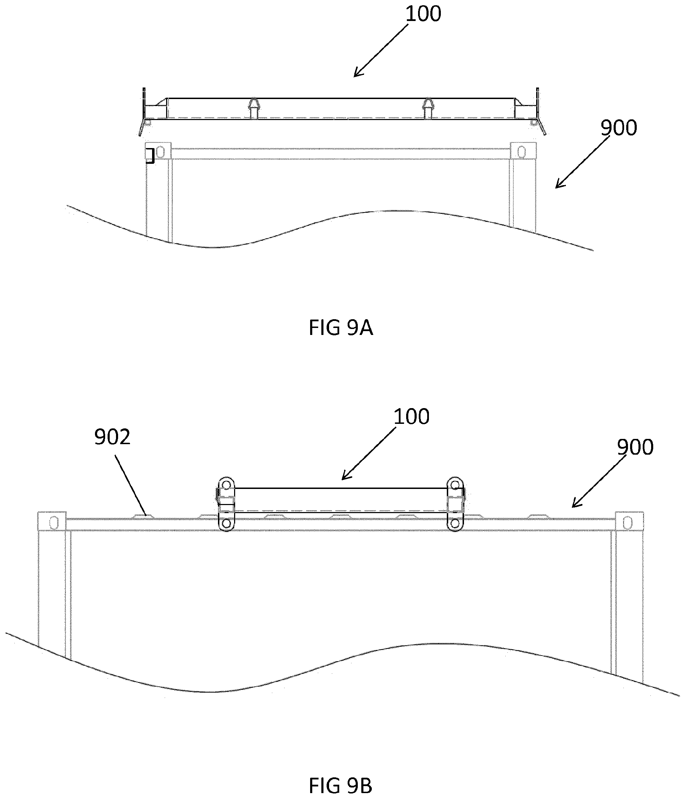

Figure 9A shows the carrier 100 of Figure 1 when about to be placed on a load container 900 of a truck. As will be appreciated, Figure 9A shows the end of the load container 900. Although not shown in Figure 9A, in this embodiment the truck also comprises a loader crane and four outriggers. Figure 9B shows the carrier 100 when mounted on the load container 900. As will be appreciated, Figure 9B shows the side of the load container 900. The carrier 100 is mounted to the top of the side walls of the load container 900, across the width of the load container 900 and above any load that may be present in the load container 900. In this embodiment, the spacers 414 referred to above are such that the carrier 100 is mounted clear of the ridges 902 of the tops of the side walls of the load container 900. The spacers 414 are also separated from one another and sized such that they do not contact the ridges 902.

An embodiment of a method which makes use of the carrier 100 of Figure 1 will now be described.

In this embodiment, a truck having a loader crane, four outriggers and a load container 900 is initially at its depot. An outrigger pad carrier 100 for the truck has previously been taken off the load container 900. Four outrigger pads 600 have also previously been placed in the outrigger pad carrier 100 and secured therein with straps. A heavy load, such as a concrete or steel product, is then loaded into the load container 900, either using the loader crane of the truck or a crane at the depot. The carrier 100, which contains the four outrigger pads 600, is then placed on the load container 900 above the load, again either using the loader crane of the truck or a crane at the depot. The carrier 100 is then secured to the load container 900 using further straps. The truck is then ready to transport the load to a building site.

At the building site, the four outriggers of the truck are partially deployed so as to temporarily stabilise the truck. The further straps are released, and the outrigger pad carrier 100 is then lifted off the load container 900 and is placed on the ground using the loader crane of the truck. The straps on the outrigger pad carrier 100 are then released by hand at ground level, and the four outrigger pads 600 are then lifted out of the carrier 900 and are placed in a position ready to receive the four outriggers respectively. Placement of the outrigger pads 600 is achieved either by hand or by using the loader crane of the truck. The outriggers are then fully deployed so as to rest on the outrigger pads 600 to thereby fully stabilise the truck. The load can then be unloaded from the load container 900.

Once the load is unloaded, the outriggers are partially retracted so as to no longer rest on the outrigger pads 600. The outrigger pads 600 are then placed in the carrier 100, either by hand or by using the loader crane, and the outrigger pads 600 are then secured in place again with the straps. The carrier 100 is then placed on the load container 900 of the truck using the loader crane. The carrier 100 is then secured to the load container 900 again using the further straps. The outriggers are then fully retracted and the truck can return to the depot.

## Claims

1. A carrier (100) for transporting one or more outrigger pads (102), the carrier (100) comprising a frame (104) for holding one or more outrigger pads (102),
***characterised in that*** said carrier (100) further comprises:
- one or more mounting structures (106) for releasably mounting the frame (104) substantially horizontally above a load container (900) of a truck or trailer; and
- one or more carrier lifting points (108) for lifting the carrier (100) vertically off or onto the load container (900) using a loader crane of the truck or trailer.

2. A carrier (100) as claimed in claim 1, wherein each mounting structure (106) extends substantially horizontally from the frame (104).

3. A carrier (100) as claimed in claim 1 or 2, wherein the one or more mounting structures (106) includes at least one mounting structure (106) provided at a first side of the frame (104) and/or includes at least one mounting structure (106) provided at a second side of the frame (104) that is opposed to the first side of the frame (104).

4. A carrier (100) as claimed in claim 1, 2 or 3, wherein each mounting structure (106) includes at least one of the one or more carrier lifting points (108) and/or comprises at least one carrier fixing point (408) for releasably fixing the carrier (100) above the load container (900).

5. A carrier (100) as claimed in any one of the preceding claims, wherein each mounting structure (106) comprises one or more mounting structure end plates.

6. A carrier (100) as claimed in claim 5, wherein the one or more mounting structure end plates comprise a substantially vertical section and/or an inclined section.

7. A carrier (100) as claimed in claim 5 or 6, wherein the one or more mounting structure end plates includes at least one carrier lifting point (108) and/or at least one carrier fixing point (408).

8. A carrier (100) as claimed in any one of the preceding claims, wherein one or more reinforcements are provided between each mounting structure (106) and the frame (104).

9. A carrier (100) as claimed in any one of the preceding claims, wherein each mounting structure (106) includes a spacer (414) on the underside of the mounting structure (106) for spacing the frame (104) from the top of the load container (900) of the truck or trailer.

10. A carrier (100) as claimed in any one of the preceding claims, wherein the carrier (100) comprises one or more securing means, and/or one or more fixing structures (110) for securing means, for securing the one or more pads (102) vertically to the frame (104).

11. A carrier (100) as claimed in any one of the preceding claims in combination with one or more outrigger pads (102), the frame (104) being sized to hold the one or more outrigger pads (102).

12. A carrier (100) as claimed in claim 11 wherein each outrigger pad (102) comprises one or more pad lifting points for facilitating lifting of that pad (102) vertically off or out of the frame (104).

13. A truck or trailer comprising a loader crane, one or more outriggers, a load container (900), and a carrier (100) for transporting outrigger pads (102) as claimed in any one of claims 1-12.

14. A method of preparing a truck or trailer for transportation of a load, the truck or trailer having a loader crane, one or more outriggers and a load container (900), the method comprising:
placing a carrier (100) for transporting one or more outrigger pads (102) as claimed in any one of claims 1-12 on the load container (900) of the truck or trailer.

15. A method of stabilising a truck or trailer, the truck or trailer having a loader crane, one or more outriggers, a load container (900) and a carrier (100) for transporting one or more outrigger pads (102) as claimed in any one of claims 1-12, the method comprising:
lifting the carrier (100) off the load container (900) of the truck or trailer;
lifting one or more outrigger pads (102) off or out of the carrier (100);
placing one or more outrigger pads (102) in a position in which the one or more outriggers will be able to rest on the one or more outrigger pads (102); and
deploying the one or more outriggers so as to rest on the one or more outrigger pads (102).

## Patentansprüche

1. Träger (100) zum Transportieren eines oder mehrerer Auslegerklötze (102), wobei der Träger (100) einen Rahmen (104) zum Halten von einem oder mehreren Auslegerklötzen (102) aufweist,
**dadurch gekennzeichnet, dass** der Träger (100) ferner aufweist:
- eine oder mehrere Befestigungsstrukturen (106) zum lösbaren Befestigen des Rahmens (104) im Wesentlichen horizontal über einem Lastcontainer (900) eines Lastwagens oder Anhängers; und
- einen oder mehrere Trägerhubpunkte (108) zum vertikalen Heben des Trägers (100) von dem oder auf den Lastcontainer (900) mithilfe eines Ladekrans des Lastwagens oder Anhängers.

2. Träger (100) nach Anspruch 1, wobei jede Befestigungsstruktur (106) im Wesentlichen horizontal von dem Rahmen (104) verläuft.

3. Träger (100) nach Anspruch 1 oder 2, wobei die eine oder mehreren Befestigungsstrukturen (106) zumindest eine Befestigungsstruktur (106) beinhalten, die sich an einer ersten Seite des Rahmens (104) befindet, und/oder zumindest eine Befestigungsstruktur (106) beinhalten, die sich an einer zweiten Seite des Rahmens (104) befindet, die der ersten Seite des Rahmens (104) gegenüberliegt.

4. Träger (100) nach Anspruch 1, 2 oder 3, wobei jede Befestigungsstruktur (106) zumindest einen von dem einen oder den mehreren Trägerhubpunkten (108) beinhaltet und/oder zumindest einen Trägerbefestigungspunkt (408) zum lösbaren Befestigen des Trägers (100) über dem Lastcontainer (900) aufweist.

5. Träger (100) nach einem der vorgenannten Ansprüche, wobei jede Befestigungsstruktur (106) eine oder mehrere Befestigungsstrukturendplatte(n) aufweist.

6. Träger (100) nach Anspruch 5, wobei die eine oder mehreren Befestigungsstrukturendplatte(n) einen im Wesentlichen vertikalen Abschnitt und/oder einen geneigten Abschnitt aufweisen.

7. Träger (100) nach Anspruch 5 oder 6, wobei die eine oder mehreren Befestigungsstrukturendplatte(n) zumindest einen Trägerhubpunkt (108) und/oder zumindest einen Trägerbefestigungspunkt (408) beinhalten.

8. Träger (100) nach einem der vorgenannten Ansprüche, wobei sich eine oder mehrere Verstärkungen zwischen jeder Befestigungsstruktur (106) und dem Rahmen (104) befinden.

9. Träger (100) nach einem der vorgenannten Ansprüche, wobei jede Befestigungsstruktur (106) einen Abstandhalter (414) auf der Unterseite der Befestigungsstruktur (106) beinhaltet, um einen Abstand zwischen dem Rahmen (104) und der Oberseite des Lastcontainers (900) des Lastwagens oder Anhängers sicherzustellen.

10. Träger (100) nach einem der vorgenannten Ansprüche, wobei der Träger (100) eine oder mehrere Sicherungseinrichtungen und/oder eine oder mehrere Befestigungsstrukturen (110) für Sicherungseinrichtungen aufweist, um den einen Klotz oder die mehreren Klötze (102) vertikal an dem Rahmen (104) zu sichern.

11. Träger (100) nach einem der vorgenannten Ansprüche in Kombination mit einem oder mehreren Auslegerklötzen (102), wobei der Rahmen (104) so dimensioniert ist, dass er den einen oder die mehreren Auslegerklötze (102) hält.

12. Träger (100) nach Anspruch 11, wobei jeder Auslegerklotz (102) einen oder mehrere Klotzhubpunkte zum Erleichtern des vertikalen Hebens des Klotzes (102) von dem Rahmen (104) oder aus dem Rahmen (104) heraus aufweist.

13. Lastwagen oder Anhänger, aufweisend einen Ladekran, einen oder mehrere Ausleger, einen Lastcontainer (900) und einen Träger (100) zum Transportieren von Auslegerklötzen (102) nach einem der Ansprüche 1 bis 12.

14. Verfahren zum Vorbereiten eines Lastwagens oder Anhängers zum Transportieren einer Last, wobei der Lastwagen oder Anhänger einen Ladekran, einen oder mehrere Ausleger und einen Lastcontainer (900) aufweist, wobei das Verfahren aufweist:
Platzieren eines Trägers (100) zum Transportieren eines oder mehrerer Auslegerklötze (102) nach einem der Ansprüche 1 bis 12 auf dem Lastcontainer (900) des Lastwagens oder Anhängers.

15. Verfahren zum Stabilisieren eines Lastwagens oder Anhängers, wobei der Lastwagen oder Anhänger einen Ladekran, einen oder mehrere Ausleger, einen Lastcontainer (900) und einen Träger (100) zum Transportieren eines oder mehrerer Auslegerklötze (102) nach einem der Ansprüche 1 bis 12 aufweist, wobei das Verfahren aufweist:
Heben des Trägers (100) von dem Lastcontainer (900) des Lastwagens oder Anhängers;
Heben eines oder mehrerer Auslegerklötze (102) von dem Träger (100) oder aus dem Träger (100) heraus;
Platzieren eines oder mehrerer Auslegerklötze (102) in einer Position, in der der eine oder die mehreren Ausleger in der Lage sein werden, auf dem einen oder
mehreren Auslegerklötzen (102) zu liegen; und
Aufstellen des einen oder der mehreren Ausleger, so dass sie auf dem einen oder
den mehreren Auslegerklötzen (102) liegen.

## Revendications

1. Un support (100) pour transporter un ou plusieurs tampons stabilisateurs (102), le support (100) comprenant un cadre (104) pour maintenir un ou des tampons stabilisateurs (102), **caractérisé en ce que** ledit support (100) comprend en plus :
- une ou plusieurs structures de montage (106) pour monter de manière amovible le cadre (104) sensiblement horizontalement au-dessus d'un container de chargement (900) d'un camion ou d'une remorque ; et
- un ou plusieurs points de levage du support (108) pour lever le support (100) verticalement hors ou sur le container de chargement (900) en utilisant une grue de chargement du camion ou de la remorque.

2. Un support tel que revendiqué à la revendication 1, dans lequel chaque structure de montage (106) s'étend sensiblement horizontalement à partir du cadre (104).

3. Un support tel que revendiqué à l'une des revendications 1 ou 2, dans lequel la ou les structures de montage (106) incluent au moins une structure de montage (106) disposée sur un premier côté du cadre (104) et/ou incluent au moins une structure de montage (106) disposée sur un second côté du cadre (104) opposé au premier côté du cadre (104).

4. Un support tel que revendiqué à l'une des revendications 1 à 3, dans lequel chaque structure de montage (106) inclut au moins un des points de levage du support (108) et/ou comprend au moins un point de fixation du support (408) pour fixer de manière amovible le support (100) au-dessus du container de chargement (900).

5. Un support (100) tel que revendiqué à l'une quelconque des revendications précédentes, dans lequel chaque structure de montage (106) comprend une ou plusieurs plaques terminales de structure de montage.

6. Un support (100) tel que revendiqué à la revendication 5, dans lequel la ou les plaques terminales des structures de montage comprennent une section sensiblement verticale et/ou une section inclinée.

7. Un support (100) tel que revendiqué à la revendication 5 ou 6, dans lequel la ou les plaques terminales des structures de montage incluent au moins un point de levage du support (108) et/ou au moins un point de fixation du support (408).

8. Un support (100) tel que revendiqué à l'une quelconque des revendications précédentes, dans lequel un ou plusieurs renforcements sont disposés entre chaque structure de montage (106) et le cadre (104).

9. Un support (100) tel que revendiqué à l'une quelconque des revendications précédentes, dans lequel chaque structure de montage (106) inclut un écarteur (414) sur le côté inférieur de la structure de montage (106) pour écarter le cadre (104) du haut du container de chargement (900) du camion ou de la remorque.

10. Un support (100) tel que revendiqué à l'une quelconque des revendications précédentes, dans lequel le support (100) comprend un ou plusieurs moyens de fixation, et/ou une ou plusieurs structures de fixation (110) des moyens de fixation, afin de fixer le ou les tampons stabilisateurs (102) en position verticale par rapport au cadre (104).

11. Un support (100) tel que revendiqué à l'une quelconque des revendications précédentes, en combinaison avec un ou plusieurs tampons stabilisateurs (102), le cadre (104) étant dimensionné pour maintenir le ou les tampons stabilisateurs (102).

12. Un support (100) tel que revendiqué à la revendication 11, dans lequel chaque tampon stabilisateur (102) comprend un ou plusieurs points de levage du tampon pour faciliter la levée de ce tampon (102) verticalement ou à l'extérieur du cadre (104).

13. Un camion ou une remorque comprenant une grue de chargement, un ou plusieurs stabilisateurs, un container de chargement (900), et un support (100) pour transporter des tampons stabilisateurs (102) tel que revendiqué à l'une quelconque des revendications 1 à 12.

14. Une méthode de préparation d'un camion ou d'une remorque pour le transport de chargement, le camion ou la remorque ayant une grue de chargement, un ou plusieurs stabilisateurs et un container de chargement (900), la méthode comprenant :
le placement du support (100) pour transporter un ou plusieurs tampons stabilisateurs (102) tel que revendiqué à l'une quelconque des revendications 1 à 12 sur le container de chargement (900) du camion ou de la remorque.

15. Une méthode de stabilisation d'un camion ou d'une remorque, le camion ou la remorque ayant une grue de chargement, un ou plusieurs stabilisateurs, un container de chargement (900) et un support (100) pour transporter un ou plusieurs tampons stabilisateurs (102) selon l'une quelconque des revendications 1 à 12, la méthode comprenant :
la levée du support (100) hors du container de chargement (900) du camion ou de la remorque ;
la levée d'un ou de plusieurs tampons stabilisateurs (102) en dehors du support (100) ;
le placement d'un ou plusieurs tampons stabilisateurs (102) dans une position dans laquelle le ou les stabilisateurs seront capables de reposer sur le ou les tampons stabilisateurs (102) ;
et
le déploiement d'un ou de plusieurs stabilisateurs de telle sorte qu'ils reposent sur le ou les tampons stabilisateurs (102).
